# EUROPEAN PATENT SPECIFICATION

(11) **EP 3 901 589 B1**
(45) Date of publication and mention of the grant of the patent: **17.01.2024**
(21) Application number: 21168563.1
(22) Date of filing: 15.04.2021
(51) Int. Cl.: G01F 23/263

(54) **CAPACITIVE POINT SOURCE LEVEL SENSOR FOR POTABLE WATER SYSTEMS**
KAPAZITIVER PUNKTQUELLENFÜLLSTANDSSENSOR FÜR TRINKWASSERSYSTEME
CAPTEUR CAPACITIF DE NIVEAU DE SOURCE PONCTUELLE POUR SYSTÈMES D'EAU POTABLE

(30) Priority: 17.04.2020 US 202063011894 P; 16.03.2021 US 202117202947
(43) Date of publication of application: 27.10.2021
(73) Proprietor: Goodrich Corporation, Charlotte, NC 28217-4578 (US)
(72) Inventor: SHEARER, Jon, Hartville 44632 (US)
(74) Representative: Dehns

(56) References cited:
- WO-A1-2006/056257
- US-A- 3 037 165
- US-A1- 2019 064 092
- US-B2- 8 789 414
- US-B2- 10 119 852

## Description

### CROSS-REFERENCE TO RELATED APPLICATIONS

This application claims priority to, and the benefit of, U.S. Provisional Patent Application Serial No. 63/011,894 filed April 17, 2020 and titled "CAPACITIVE POINT SOURCE LEVEL SENSOR FOR POTABLE WATER SYSTEMS".

### FIELD

The present disclosure relates to systems and methods for detecting liquid levels in a container using capacitive point source level sensors.

### BACKGROUND

Aircraft may include various containers for transporting or storing liquid. For example, aircraft may include one or more container for storing potable water used for cooking, drinking, and the like during flight. It is desirable to measure or detect an amount of the potable water remaining in each container. In that regard, sensors may be installed in such containers to detect the water levels. Water level sensor systems are disclosed in US 10119852, US 3037165 and WO 2006/056257.

### SUMMARY

Disclosed herein is a capacitive point source sensor for detecting presence of a liquid as defined by claim 1.

In any of the foregoing embodiments, the main body includes a coupling portion including outer threads configured to be threaded into the container of the liquid.

In any of the foregoing embodiments, the main body further includes a sensor portion that includes the two conductive contacts and has a smaller diameter than the coupling portion, and wherein the sensor portion is configured to be located in the container of the liquid.

In any of the foregoing embodiments, the insulator encloses the sensor portion of the main body.

In any of the foregoing embodiments, the insulator is resistant to corrosion.

In any of the foregoing embodiments, the insulator includes at least one of a glass or a polymer coating.

In any of the foregoing embodiments, each of the two conductive contacts resembles a semicircle and is separated by a gap.

In any of the foregoing embodiments, the container of the liquid is configured to contain potable water on an aircraft.

In any of the foregoing embodiments, the main body includes a coupling portion including outer threads configured to be threaded into the container of the liquid; and the main body further includes a sensor portion that includes the two conductive contacts and has a smaller diameter than the coupling portion, and wherein the sensor portion is configured to be located in the container of the liquid.

In any of the foregoing embodiments, the insulator encloses the sensor portion of the main body.

In any of the foregoing embodiments, the insulator includes at least one of a glass or a polymer coating.

In any of the foregoing embodiments, each of the two conductive contacts resembles a semicircle and is separated by a gap.

In any of the foregoing embodiments, the container of the liquid is configured to contain potable water on an aircraft.

Also disclosed is a system for detecting presence of a liquid as defined by claim 9.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft having a container for storing potable water, in accordance with various embodiments;
FIG. 2 illustrates a system for detecting water levels in the container of the aircraft of FIG. 1, in accordance with various embodiments;
FIG. 3A illustrates a capacitive point source sensor of the system of FIG. 2, in accordance with various embodiments; and
FIG. 3B illustrates a sensor portion of the sensor of FIG. 3A, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made within the scope of the invention as defined by the claims. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

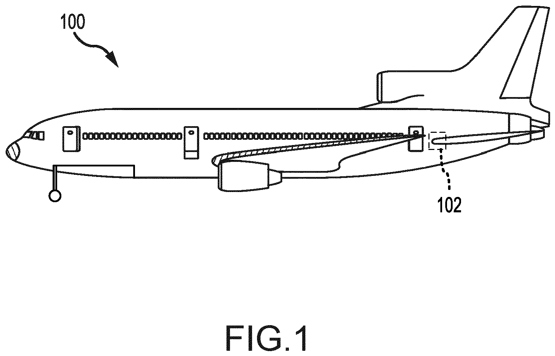

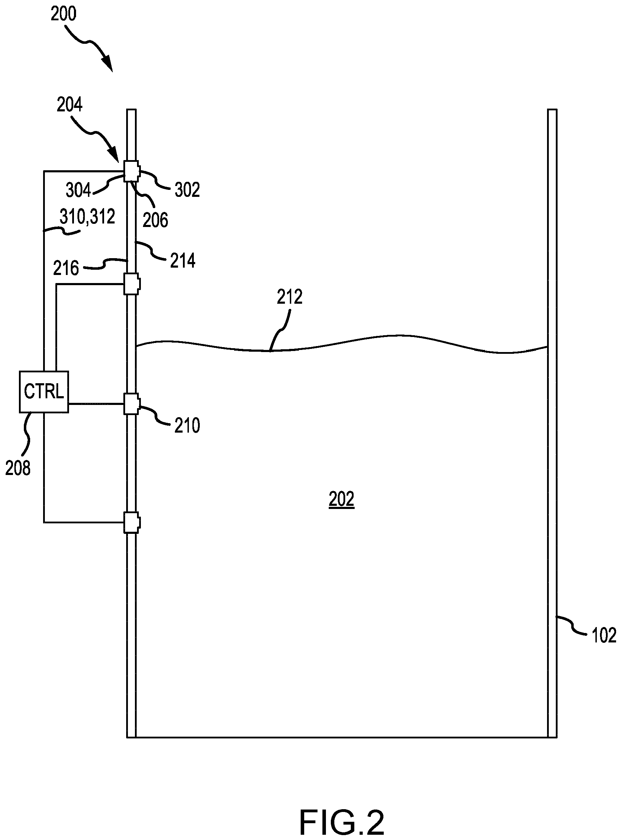

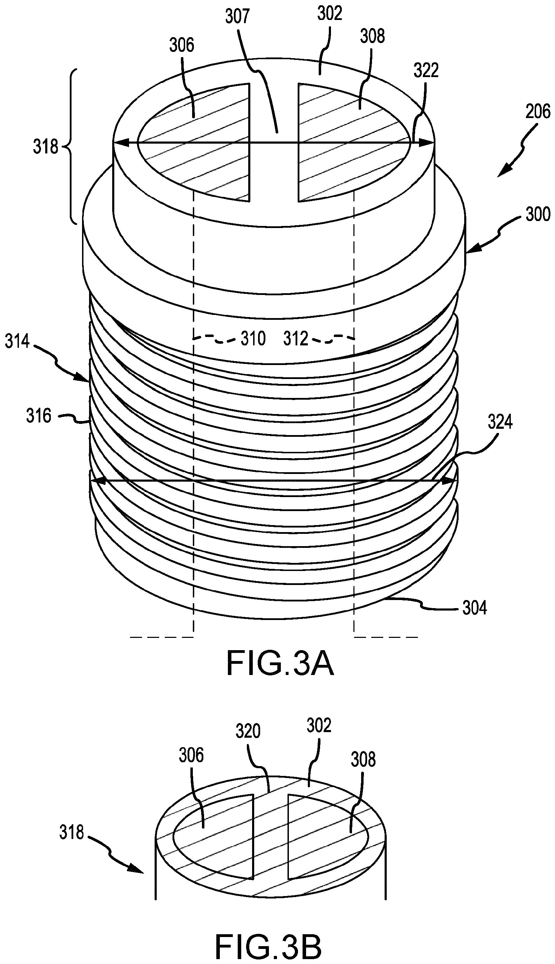

Referring now to FIG. 1, an aircraft 100 may include one or more container 102 for retaining or storing a liquid, such as potable water. Referring now to FIGS. 2, 3A, and 3B, a system 200 for detecting levels of a liquid 202 in the container 102 is shown. The system 200 includes a plurality of capacitive point source sensors (sensors) 204, including a sensor 206. Each of the sensors 204 may be coupled to the container 102 at various locations and may be coupled to a controller 208. Each location may correspond to a different level of the liquid 202 in the container 102. As will be described below, the sensors 204 may detect data corresponding to the presence of liquid at the specific location of the sensor. For example, the sensor 206 may detect a lack of liquid as it is located above a liquid level 212, and a sensor 210 located below the liquid level 212 may detect the presence of liquid.

The sensor 206 may include a main body 300 having a sensor end 302 and an outer end 304. The sensor end 302 may include a first conductive contact 306 and a second conductive contact 308 separated by a gap 307, and may be located inside the container 102. The outer end 304 may be located flush with an outer end of the container 102 or may be located external relative to the container 102. The conductive contacts 306, 308 may each be semicircular in shape, or may have any other shape. In various embodiments, the conductive contact 306, 308 are designed to have a semicircular shape such that removal of the gap 307 would result in the contacts 306, 308 forming a circle.

The first conductive contact 308 may be coupled to a first lead 310 and the second conductive contact 308 may be coupled to a second lead 312. The leads 310, 312 may extend through the main body 300 and may be coupled to the controller 208. The controller 208 may transmit a first alternating current (AC) signal, such as a sinusoidal signal or another oscillating signal, to the first conductive contact 306 via the first lead 310. In various embodiments, the AC signal may be greater than or equal to 500 Hertz (Hz), 1 Kilohertz (KHz), 5 KHz, or the like.

Capacitance between the first conductive contact 306 and the second conductive contact 308 may vary based on whether the contacts 306, 308 are in close proximity to liquid. For example, if the first conductive contact 306 and the second conductive contact 308 are in close proximity to water (e.g., they are at or below the water level in the container 102), the capacitance between the first conductive contact 306 and the second conductive contact 308 may be greater than if the contacts 306, 308 are relatively far from the water (e.g., they are above the water level in the container 102).

In that regard, the second conductive contact 308 may receive an electrical signal due to the capacitance with the first conductive contact 306. The signal may be transmitted to the controller 208 via the second leads 312. The controller 208 may include one or more logic devices such as one or more of a central processing unit (CPU), an accelerated processing unit (APU), a digital signal processor (DSP), a field programmable gate array (FPGA), an application specific integrated circuit (ASIC), or the like. In various embodiments, the controller 208 may further include any non-transitory memory known in the art. The memory may store instructions usable by the logic device to perform operations.

The controller 208 may determine whether the liquid 202 is present at the level of the sensor 206 based on an amplitude of the received signal. The controller 208 may be programmed with amplitudes that indicate the presence or lack of water, or the controller may learn which amplitudes indicate the presence or lack of water. Because the signal is an AC signal, there is a lack of transfer of ions to any part of the container 102, thus failing to affect any potable water.

The main body 300 of the sensor 206 may include a coupling portion 314 and a sensor portion 318. In various embodiments, the coupling portion 314 may include features, such as outer threads 316, used to couple the main body 300 to the container 102. In various embodiments, the coupling portion 314 may be coupled to the main body 300 in various other manners such as a press fit, use of an adhesive, use of one or more fastener, or the like.

The sensor portion 318 may include the first conductive contact 306 and the second conductive contact 308. An insulator 320 may be positioned over some or all of the sensor portion 318. In various embodiments, the insulator 320 may be positioned over the entire sensor portion 318; in various embodiments, the insulator 320 may be positioned over the entire sensor end 302; and in various embodiments, the insulator 320 may be positioned only over the contacts 306, 308. The insulator 320 may include any electrically insulating material such as glass, a polymer coating (e.g., polytetrafluoroethylene (PTFE, available under the trade name Teflon^{™})), or the like.

Use of the insulator 320 reduces the likelihood of corrosion of the contact 306, 308 along with the container 102. The insulator 320 may further be resistant to corrosion (i.e., the insulator may fail to corrode in response to being in contact with the specific liquid stored in the corresponding container), further reducing the likelihood of corrosion of any component. This provides advantages over conventional sensors which are prone to corrosion and cause corrosion inside water tanks. Use of the insulator 320 isolates the sensor 206 from contacting the liquid contents of the container 102 and reduces the likelihood of the sensor 206 being a catalyst for corrosion.

In various embodiments, the sensor end 302 may be flush with an inner surface 214 of the container 102. In various embodiments, the sensor portion 318 may extend into the container 102. In various embodiments, the outer end 304 may extend beyond an outer surface 216 of the container 102 and, in various embodiments, the outer end 304 may be flush with the outer surface 216.

In various embodiments, the sensor portion 318 may have a sensor diameter 322 that is less than a coupling diameter 324 of the coupling portion 314.

Each of the sensors 204 may operate in a similar manner as the sensor 206 and may have similar features. Any quantity of sensors 204 may be installed in the container 102 and coupled to the controller 208. A greater quantity of sensors 204 provides greater granularity of measurement of the liquid level in the container 102.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A capacitive point source sensor for detecting presence of a liquid, the capacitive point source sensor comprising:
a main body (300) having a sensor end (302) and an outer end (304), the main body being configured to be coupled to and at least partially inserted through a container of the liquid;
two conductive contacts (306, 308) located on the sensor end of the main body and separated by a gap;
an insulator (320) enclosing the two conductive contacts;
two leads (310, 312) each coupled to one of the two conductive contacts and extending through the main body,
**characterized in that**
the sensor end is configured to be flush with an inner surface (214) of the container and
**in that** a first lead of the two leads (310) is configured to receive an alternating current, AC, signal and to transmit the AC signal to a first conductive contact (306) of the two conductive contacts such that capacitance between the two conductive contacts can be determined based on an amplitude of an electrical signal received by a second lead of the two leads via a second conductive contact of the two conductive contacts, the capacitance corresponding to the presence of the liquid.

2. The capacitive point source sensor of claim 1, wherein the main body includes a coupling portion (314) including outer threads configured to be threaded into the container of the liquid.

3. The capacitive point source sensor of claim 1, wherein the main body further includes a sensor portion (318) that includes the two conductive contacts and has a smaller diameter than the coupling portion, and wherein the sensor portion is configured to be located in the container of the liquid.

4. The capacitive point source sensor of claim 2 or 3, wherein the insulator encloses the sensor portion of the main body.

5. The capacitive point source sensor of claim 4, wherein the insulator is resistant to corrosion.

6. The capacitive point source sensor of any preceding claim, wherein the insulator includes at least one of a glass or a polymer coating.

7. The capacitive point source sensor of any preceding claim, wherein each of the two conductive contacts resembles a semicircle and is separated by a gap (307).

8. The capacitive point source sensor of any preceding claim, wherein the container of the liquid is configured to contain potable water on an aircraft.

9. A system for detecting presence of a liquid, the system comprising:
a container (102) configured to retain the liquid; and
a plurality of capacitive point source sensors (204) as claimed in any preceding claim.

## Patentansprüche

1. Kapazitiver Punktquellensensor zum Erkennen des Vorhandenseins einer Flüssigkeit, wobei der kapazitive Punktquellensensor umfasst:
einen Hauptkörper (300), der ein Sensorende (302) und ein äußeres Ende (304) aufweist, wobei der Hauptkörper zum Koppeln an und mindestens Teileinsetzen durch einen Behälter mit der Flüssigkeit konfiguriert ist;
zwei leitende Kontakte (306, 308), die an dem Sensorende des Hauptkörpers angeordnet und durch einen Spalt getrennt sind;
einen Isolator (320), der die beiden leitenden Kontakte umschließt;
zwei Leitungen (310, 312), die jeweils mit einem der beiden leitenden Kontakte verbunden sind und sich durch den Hauptkörper erstrecken, **dadurch gekennzeichnet, dass**
das Sensorende zum bündigen Abschließen mit einer Innenfläche (214) des Behälters konfiguriert ist und dass eine erste Leitung der beiden Leitungen (310) zum Empfangen eines Wechselstrom(AC)-Signals und zum Übertragen des AC-Signals an einen ersten leitenden Kontakt (306) der beiden leitenden Kontakte konfiguriert ist, sodass eine Kapazität zwischen den beiden leitenden Kontakten basierend auf einer Amplitude eines elektrischen Signals bestimmt werden kann, das durch eine zweite Leitung der beiden Leitungen über einen zweiten leitenden Kontakt der beiden leitenden Kontakte empfangen wird, wobei die Kapazität dem Vorhandensein der Flüssigkeit entspricht.

2. Kapazitiver Punktquellensensor nach Anspruch 1, wobei der Hauptkörper einen Kopplungsabschnitt (314) beinhaltet, der Außengewinde beinhaltet, die zum Einschrauben in den Behälter mit der Flüssigkeit konfiguriert sind.

3. Kapazitiver Punktquellensensor nach Anspruch 1, wobei der Hauptkörper ferner einen Sensorabschnitt (318) beinhaltet, der die beiden leitenden Kontakte beinhaltet und einen kleineren Durchmesser als der Kopplungsabschnitt aufweist, und wobei der Sensorabschnitt zum Anordnen in dem Behälter mit der Flüssigkeit konfiguriert ist.

4. Kapazitiver Punktquellensensor nach Anspruch 2 oder 3, wobei der Isolator den Sensorabschnitt des Hauptkörpers umschließt.

5. Kapazitiver Punktquellensensor nach Anspruch 4, wobei der Isolator korrosionsbeständig ist.

6. Kapazitiver Punktquellensensor nach einem der vorhergehenden Ansprüche, wobei der Isolator mindestens eine von einer Glas- oder einer Polymerbeschichtung beinhaltet.

7. Kapazitiver Punktquellensensor nach einem der vorhergehenden Ansprüche, wobei jeder der beiden leitenden Kontakte einem Halbkreis ähnelt und durch einen Spalt (307) getrennt ist.

8. Kapazitiver Punktquellensensor nach einem der vorhergehenden Ansprüche, wobei der Behälter mit der zum Enthalten von Trinkwasser in einem Luftfahrzeug konfiguriert ist.

9. System zum Erkennen des Vorhandenseins einer Flüssigkeit, wobei das System Folgendes umfasst:
einen Behälter (102), der zum Aufbewahren der Flüssigkeit konfiguriert ist; und
eine Vielzahl von kapazitiven Punktquellensensoren (204) nach einem der vorhergehenden Ansprüche.

## Revendications

1. Capteur capacitif à source ponctuelle destiné à détecter la présence d'un liquide, le capteur capacitif à source ponctuelle comprenant :
un corps principal (300) ayant une extrémité de capteur (302) et une extrémité externe (304), le corps principal étant configuré pour être couplé à et au moins partiellement inséré à travers un récipient du liquide ;
deux contacts conducteurs (306, 308) situés sur l'extrémité de capteur du corps principal et séparés par un espace ;
un isolant (320) entourant les deux contacts conducteurs ;
deux fils (310, 312) couplés chacun à l'un des deux contacts conducteurs et s'étendant à travers le corps principal,
**caractérisé en ce que**
l'extrémité de capteur est configurée pour affleurer une surface interne (214) du récipient et **en ce qu'**un premier fil des deux fils (310) est configuré pour recevoir un signal de courant alternatif, CA, et pour transmettre le signal CA à un premier contact conducteur (306) des deux contacts conducteurs de sorte que la capacité entre les deux contacts conducteurs puisse être déterminée sur la base d'une amplitude d'un signal électrique reçu par un second fil des deux fils par l'intermédiaire d'un second contact conducteur des deux contacts conducteurs, la capacité correspondant à la présence du liquide.

2. Capteur capacitif à source ponctuelle selon la revendication 1, dans lequel le corps principal comporte une partie de couplage (314) comportant des filets externes configurés pour être filetés dans le récipient du liquide.

3. Capteur capacitif à source ponctuelle selon la revendication 1, dans lequel le corps principal comporte en outre une partie de capteur (318) qui comporte les deux contacts conducteurs et a un diamètre plus petit que la partie de couplage, et dans lequel la partie de capteur est configurée pour être située dans le récipient du liquide.

4. Capteur capacitif à source ponctuelle selon la revendication 2 ou 3, dans lequel l'isolant entoure la partie de capteur du corps principal.

5. Capteur capacitif à source ponctuelle selon la revendication 4, dans lequel l'isolant est résistant à la corrosion.

6. Capteur capacitif à source ponctuelle selon une quelconque revendication précédente, dans lequel l'isolant comporte au moins un revêtement en verre ou en polymère.

7. Capteur capacitif à source ponctuelle selon une quelconque revendication précédente, dans lequel chacun des deux contacts conducteurs ressemble à un demi-cercle et est séparé par un espace (307).

8. Capteur capacitif à source ponctuelle selon une quelconque revendication précédente, dans lequel le récipient du liquide est configuré pour contenir de l'eau potable à bord d'un aéronef.

9. Système de détection de la présence d'un liquide, le système comprenant :
un récipient (102) configuré pour retenir le liquide ; et
une pluralité de capteurs capacitifs à source ponctuelle (204) selon une quelconque revendication précédente.
